# EUROPÄISCHE PATENTANMELDUNG

(11) **EP 1 547 543 A1**
(43) Veröffentlichungstag der Anmeldung: **29.06.2005**
(21) Anmeldenummer: 03029738.6
(22) Anmeldetag: 23.12.2003
(51) Int. Cl.: A61C 8/00

(54) **Abutment für Dentalimplantate**

(71) Anmelder: Heitland, Steffen, Dr., 81545 München (DE); Schendell-Gröling, Claus, Dipl.-Ing., 82205 Gilching (DE); Strosche, Thomas, 81545 München (DE)
(72) Erfinder: Heitland, Steffen, Dr., 81545 München (DE); Schendell-Gröling, Claus, Dipl.-Ing., 82205 Gilching (DE); Strosche, Thomas, 81545 München (DE)
(74) Vertreter: Körner, Ekkehard, Dipl.-Ing.

(57) **Zusammenfassung**

Ein Abutment für die Verankerung einer Dentalprothese an einem Dentalimplantat mit einer Pfostenanordnung und einer mit dieser verbundenen Einschraubkonstruktion zum Einschrauben in das Dentalimplantat weist zwischen der Pfostenanordnung und der Einschraubkonstruktion ein Kugelgelenk auf, und an der Einschraubkonstruktion und der Stiftanordnung sind Einrichtungen ausgebildet, mit denen das Kugelgelenk an dem Implantat und die Pfostenanordnung an dem Kugelgelenk und das Kugelgelenk in sich selbst starr festgelegt werden können.

## Beschreibung

### Gebiet der Erfindung

Die Erfindung bezieht sich auf ein Abutment zur Verwendung bei der Verankerung einer Zahnprothese an einem Dentalimplantat.

### Stand der Technik

Für den Zahnersatz in Implantat-Technik wird in den Kieferknochen ein dort einheilendes, dübelartiges Verankerungselement, das eigentliche Implantat, eingesetzt, auf das eine Mesiostruktur, auch Abutment genannt, aufgesetzt wird, die wiederum Basis für die Verankerung einer Krone ist, die beispielsweise eine einzelne Zahnkrone oder auch das Glied einer Brücke sein kann, die an mehreren Punkten im Kiefer, ggf. mittels mehrerer Implantate, fixiert ist.

Bis Ende der 80 er Jahre des vergangenen Jahrhunderts dominierte in der Dentalimplantologie die Chirurgie über die Prothetik. Nur dort, wo qualitativ und quantitativ geeigneter Knochen im Ober- bzw. Unterkiefer vorhanden war, wurde vom Chirurgen implantiert, d.h. das vorerwähnte Implantat eingesetzt. Er hatte keine andere Wahl. Dadurch ergaben sich mitunter Stellungen der Implantate, die für die Fixierung des Zahnersatzes alles andere als ideal waren. Der nachbehandelnde Prothetiker hatte darin das Problem, wie er mit den gesetzten Implantaten zurechtkam. Er war gezwungen, mit hohem und damit teurem zahntechnischem Aufwand die dreidimensionalen Fehlstellungen der gesetzten Implantate zu kompensieren. Individuell hergestellte Verbindungselemente, wie Doppelkronen (Teleskopkronen), horizontale und vertikale Doppelverschraubungen, Stege, abnehmbare Brücken, Freiendbrücken usw., waren mehr oder weniger geeignete Hilfsmittel, um die erforderlichen parallelen Einschubrichtungen bei Verankerung einer Brücke an mehreren Implantaten und senkrechte Belastungen für den Kauakt zu erzielen - oft nur mit einem bescheidenen Ergebnis für Funktion, Hygiene und Ästhetik. Ein äußerst umfangreiches Sortiment an Mesiostrukturen musste bereit gehalten werden, um die Kompensation von Implantatfehlstellungen erzielen zu können. Dennoch konnte auch damit keine den Patienten befriedigende Lösung gefunden werden, denn die angebotenen Mesiostrukturen waren nur in abgestuften Dimensionen erhältlich, die eine Feinanpassung durch Beschleifen im am Implantat, d.h. am Patienten angebrachten Zustand erforderlich machte. Dieses Beschleifen konnte (und kann) aber wegen der offenen Wunde nicht im frisch eingesetzten Zustand des Implantats ausgeführt werden. Die Behandlung erforderte daher zunächst das Abheilen der Wunde, so dass sie sich entsprechend lang hinzog.

Mit den 90 er Jahren des vergangenen Jahrhunderts griffen die Chirurgen zu knochenaufbauenden Maßnahmen (Augmentationen). Plötzlich schien es fast ohne Grenzen möglich zu sein, überall dort, wo Kieferknochen fehlte, diesen mit Hilfe von Eigen- und/oder Fremdknochen zu ergänzen und in horizontaler und vertikaler Richtung aufzubauen, um sofort oder in einer zweiten Operation Implantate in einer vom Prothetiker geforderten und bestimmten Achsenrichtung einzusetzen. Der frühere hohe prothetisch-zahntechnische Aufwand war nicht mehr notwendig. Die prothetische Versorgung wurde einfach. Dafür allerdings musste ein hoher Aufwand an chirurgischen Maßnahmen getroffen werden, mit entsprechend hohen Belastungen für den Patienten. Sehr oft mussten nach geraumer Zeit geplant oder unerwartet dritte, vierte und fünfte Operationen durchgeführt werden, weil sich unerwartet Resorptionen von Knochen und Schleimhäuten mit gravierenden Konsequenzen für die Hygienefähigkeit, Aussprache und Ästhetik einstellten und letztendlich auch der Verlust der gesetzten Implantate drohte.

Mit dem Beginn des neuen Jahrtausend war die Euphorie über die Augmentationen vorüber. Man erkannte, dass der unmäßig belastende chirurgische Aufwand mehrerer Operationen doch nicht das erwartete Ergebnis erzielen oder gar erhalten konnte. Inakzeptable Resorptionen der Hart- und Weichgewebsaufbauten waren die Regel. So werden z.B. in der Literatur Resorptionen von transplantiertem Beckenkammknochen von 40 bis 50 % nach fünf Jahren beschrieben.

Heute geht man von dem übermäßig belastenden Aufwand der "großen" Chirurgie der 90 er Jahre weg. Man implantiert in letzter Zeit bevorzugt wieder dort, wo auch der natürliche Kieferknochen vorhanden ist. Neuartige präzise diagnostische Maßnahmen, wie z.B. spezielle Computertomographien mit digitalen Aufbereitungen, zeigen quasi jede Nische des natürlichen Kieferknochens für die geplante Implantation. Damit lässt sich zwar der große zahhtechnische Aufwand der 80er Jahre verringern, doch stellt sich noch immer das Problem der mitunter ungünstigen Stellungen der Implantate und die daraus erwachsenden Probleme, die oben schon erläutert wurden.

### Übersicht über die Erfindung

Der Erfindung liegt daher die Aufgabe zugrunde, ein Abutment für Dentalimplantate anzugeben, mit dem eine ungünstige Achsenneigung des gesetzten Implantates kompensiert werden kann und dem prothetisch tätigen Zahnarzt die Möglichkeit gegeben wird, sofort jede gewünschte Achsenneigung zum parallelen Aufsetzen eines festen oder abnehmbaren. Zahnersatzes einzustellen.

Diese Aufgabe wird durch die im Anspruch 1 angegebenen Merkmale gelöst. Vorteilhafte Weiterbildungen der Erfindung sind Gegenstand der Unteransprüche.

Die Erfindung schafft ein Abutment, dessen wesentlicher Bestandteil ein Kugelgelenk ist, das innerhalb konstruktiv vorgegebener Grenzen dreidimensional verstellbar ist und in seiner eingestellten Position fixiert werden kann. Auf diese Weise wird es möglich, den für die Verankerung einer Prothese bestimmten Abschnitt der Mesiostruktur am Patienten im frisch eingesetzten Zustand des Implantats in eine gewünschte Lage zu bringen und dort zu fixieren, auch wenn die Winkelstellung des Implantats, an dem das Abutment angebracht wird, nicht mit jener der gewünschten Lage übereinstimmt. Das Herumprobieren mit mehreren starren Mesiostrukturen vergangener Tage, bis das einigermaßen geeignete Exemplar gefunden ist, und das Abwarten der Einheilung des Implantats bis zum Einsetzen und Beschleifen der Mesiostruktur entfällt.

### Vorteile der Erfindung

Die Erfindung schafft nicht nur für den Zahnarzt beachtliche Vorteile bei der Behandlung des Patienten, wie bereits erwähnt, sondern ist auch für letzteren mit enormen Annehmlichkeiten verbunden. Er kann nämlich unmittelbar nach dem Implantieren mit "seinen" neuen und festen Zähnen - freilich zunächst mit einem Provisorium, da die endgültige Krone erst noch im Labor gefertigt werden muss und später gegen das Provisorium ausgetauscht wird - nach Hause gehen und muss sich nicht, wie es früher unvermeidlich war, mit Zahnlücken und Operationswunden in der Öffentlichkeit zeigen und invasive operative Nachbehandlungen nach dem erstmaligen Abheilen der Operationswunde über sich ergehen lassen. Wie dieses durch die Erfindung ermöglicht wird, soll nachfolgende erläutert werden. Der implantologische Zahnarzt fixiert das Implantat durch Einschrauben desselben im Kieferknochen, wofür in der Regel ein Drehmoment von 30 bis 40 Ncm erforderlich ist, und verschließt die Wunde mit Primärnähten. Unmittelbar nach der Implantation fixiert der prothetische Zahnarzt das erfindungsgemäße Abutment an dem Implantat mit einem Drehmoment, das geringer als jenes ist, mit dem das Implantat eingeschraubt wurde, beispielsweise mit 20 Ncm und richtet dabei die Achse des Abutment zur Aufnahme der provisorischen Versorgung in einer gewünschten Stellung aus. Der Pfosten des Abutment hat einen Konus von beispielsweise 5 Grad, der es dem prothetischen Zahnarzt hinreichend verzeiht, wenn er die Achsrichtung des Abutment nicht genau einstellen kann. Diese Form ist besonders vorteilhaft, wenn mehrere Implantate eingesetzt und zugehörige Abutments in sie eingeschraubt werden, weil es für das Aufschieben einer Brücke auf die Pfosten der Abutments erforderlich ist, dass alle Pfosten zueinander parallel stehen. Auf die Koni werden vom Zahnarzt vorgefertigte und bündig passende Abformhülsen aufgesetzt, deren Innenkonturen gleichzeitig die Innenflächen der zu fertigenden provisorischen Kronen darstellen. Über die Abformhülsen erfolgen die Bissnahme und ein Abdruck zur sofortigen Herstellung eines Kunststoff-Provisoriums im zahntechnischen Labor. Das Provisorium ist nach etwa zwei Stunden fertig und wird dann vom Zahnarzt auf die Pfosten der Abutments zementiert. Diese provisorische Versorgung kann und muss bei Verankerung über mehrere Implantate wegen der relativen Parallelität der Abutments aus einem Stück nach dem Prinzip der zirkulären Versteifung gefertigt werden, die wiederum für die Immobilität und sofortige vertikale Belastbarkeit der Implantate Voraussetzung ist. Drehmomente in der Querrichtung der Implantate sind ausgeschlossen, und die knöcherne Einheilung ist damit gesichert.

Es ergibt sich somit der immense Vorteil, dass wegen der sofortigen individuellen Einstellbarkeit der Abutments eine unmittelbare prothetische Versorgung auf den gesetzten Implantaten möglich ist. Wegen der vorgefertigten Hülsen gibt es keine komplizierten Abdrücke und keine Beeinträchtigung der Wunden, wegen der unmittelbar möglichen zirkulären Versteifung ("Verblockung") mit Hilfe der provisorischen Versorgung ist eine Immobilität gewährleistet, die die entscheidende Voraussetzung für die knöcherne Einheilung ("Osseointegration") der Implantate und ihrer Abutments bei sofort möglicher Kaubelastung ist.

Die Erfindung begünstigt auch den Heilungsprozess, wie nachfolgend erläutert wird. Zahnfleisch mag Konvexitäten angrenzender Oberflächen. Hier wandert es hin. Zahnfleisch mag keine Parallelitäten oder gar Konkavitäten. Von dort wandert es weg. Das Kugelgelenk des erfindungsgemäßen Abutment sitzt nach der Installation desselben auf dem Implantatkopf und somit im Gingivalbereich und begünstigt aufgrund seiner Form biologisch die Zahnfleischanlagerung, die aufgrund der Tatsache, dass die erfindungsgemäßen Abutments unmittelbar im Anschluss an die chirurgische Insertion der Implantate aufgeschraubt werden, sofort beginnen kann und nicht durch eine nachfolgende Operation, wie früher erforderlich, wieder gestört wird. Flächenhafte Konkavitäten, Spalten und Nischen, die eine Anlagerung der Weichgewebsmanschette verhindern würden, sind nicht vorhanden.

Die Erfindung schafft auch für den Zahntechniker Erleichterungen. Das Abutment weist vorteilhafterweise eine vorgefertigte Schulter auf, die dem Zahntechniker die Grenze vom Implantataufbau zur Krone genau darstellt. Trotz der sofortigen Einstellbarkeit des Abutment und damit unterschiedlicher Achsenrichtung gegenüber dem Implantat bleibt diese Schulter erhalten. Eine provisorische Krone mit oder ohne vorgefertigter Hülse kann präzise aufgepasst und ohne Spaltbildung zementiert werden.

Weiterhin hat die Erfindung auch Vorteile, die ggf. erst sehr viel später wichtig sind. Das einmal aufgeschraubte Abutment bleibt trotz späterer Behandlungsschritte immer auf dem Implantat. Sollten die umgebenden Weich- und/oder Hartgewebe in irgendeine Richtung wegschwinden ("Resorptionen"), kann das Abutment individuell in Höhe des Zahnfleischsaumes nachpräpariert werden. Dieses ist auf Grund der Gestaltung des Abutment und der Fülle an Abutmentmaterial problemlos möglich. Das Abtragen des Abutment in der Höhe gelingt wie bei allen anderen Abutments auch, ohne die wesentliche Form oder seine Funktion zu gefährden.

Nach der Einheilung in den Kieferknochen vertragen das Implantat und das Abutment die Erschütterungen der Präparation im Munde des Patienten ohne weiteres. Nach der Abheilung und Anlagerung der Zahnfleischmanschette gibt es zudem keine Blutungen mehr, die eine präzise Abdrucknahme verhindern würden. Aus diesem Grunde ist jetzt keine Abformhülse mehr notwendig.

Zusammenfassend ist festzuhalten: Ein einmal in ein Implantat eingeschraubtes Abutment ist sowohl zur Aufnahme aller provisorischen Versorgungen wie auch der endgültigen prothetischen Versorgung geeignet. Im Gegensatz zu bekannten Systemen ist prinzipiell der Einsatz zweiter, dritter oder gar vierter Abutments im Verlaufe der prothetischen Behandlung nicht mehr notwendig.

Die Erfindung ist zudem geeignet, mit den verschiedenartigsten, marktüblichen Implantatsystemen kombiniert zu werden. Das Abutment kann prinzipiell sowohl über externe (z.B. externer Sechskant oder "Hex") wie auch interne (z.B. interner Hex, Konus oder Nuten) Verbindungsstrukturen des Implantatkopfes aller gängigen Implantatsysteme aufgebracht werden. Der drehbare obere Teil des Abutment wird davon nicht berührt. Es muss vom Hersteller des Abutment nur der feste untere Teil des Abutment an das jeweilige Implantatdesign angepasst und dann dem Zahnarzt zur Verfügung gestellt werden.

### Kurzbeschreibung der Zeichnungen

Es zeigt jeweils im Längsschnitt:
- Fig. 1: eine erste Ausführungsform eines Abutment nach der Erfindung in einem an einem Implantat angebrachten Zustand,
- Fig. 2: den oberen, schwenkbaren Abschnitt des Abutment von Fig. 1 in zusammengesetzten Zustand der es bildenden Teile,
- Fig. 3: eine Explosionsdarstellung der Teile von Fig. 2,
- Fig. 4: eine Explosionsdarstellung von Implantat und unteren Abschnitt des Kugelgelenks, ohne Abutment
- Fig. 5: eine zweite Ausführungsform eines Abutment nach der Erfindung an einem an einem Implantat angebrachten Zustand,
- Fig. 6: Kugelgelenkteile aus Fig. 5 vor dem Verschweißen,
- Fig. 7: eine Spannhülse aus Fig. 6, und
- Fig. 8: das an sich bekannte Implantat aus Fig. 5 als Einzelteil.

### Detaillierte Beschreibung der Erfindung

Die Erfindung wird nachfolgend unter Bezugnahme auf zwei in den Zeichnungen dargestellte Ausführungsformen näher erläutert.

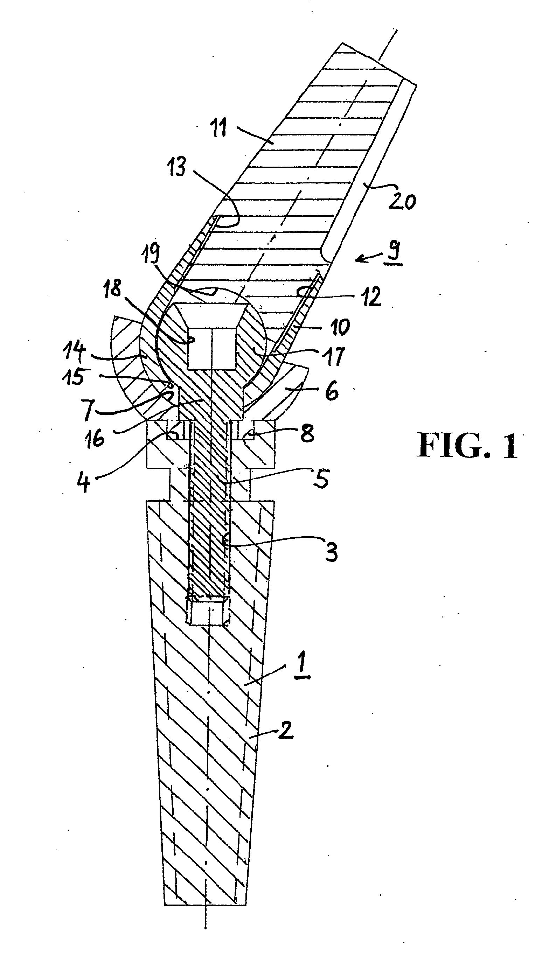

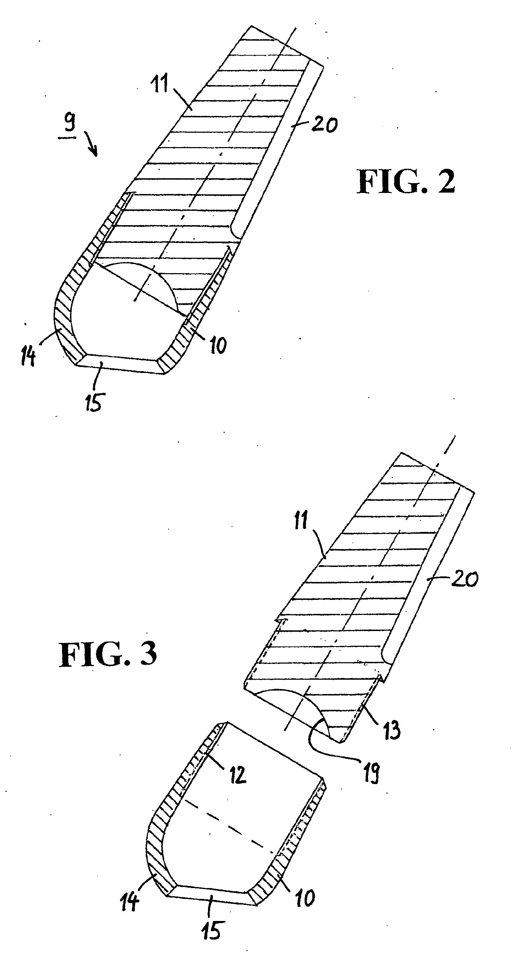

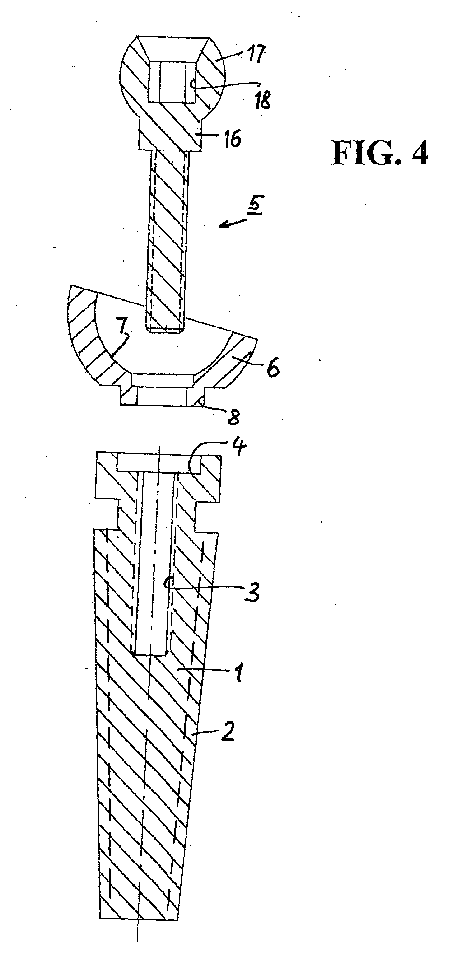

Fig. 1 zeigt einen Längsschnitt durch ein Zahnimplantat mit einer daran angebrachten Mesiostruktur oder Abutment nach der vorliegenden Erfindung, und die Figuren 2 bis 4 zeigen im Längsschnitt Einzelteile und Unterbaugruppen derselben. Sie sind in die nachfolgende Erläuterung einbezogen, auch wenn auf sie nicht im einzelnen konkret Bezug genommen wird.

Man erkennt in Fig. 1 das eigentliche Implantat 1, das von üblicher Bauart ist. Es handelt sich dabei um einen dübelartigen Körper, der von oben nach unten konisch zuläuft und an seinem äußeren Umfang ein Einschraubgewinde 2 aufweist. An seinem oberen Ende erstreckt sich in das Implantat 1 zentrisch eine Gewindebohrung 3. Das Implantat 1 hat an seinem oberen Ende um die Gewindebohrung 3 herum eine Vertiefung 4, die vorzugsweise einen prismatischen, beispielsweise vieleckigen, insbesondere sechs- oder zwölfeckigen Querschnitt aufweist, wie in der einschlägigen Technik bekannt ist. Mittels einer Schraube 5, die in die Gewindebohrung 3 eingeschraubt ist, ist auf dem Implantat 1 eine mit einem Durchgangsloch versehene Lagerschale 6 befestigt, die an ihrer dem Implantat 1 abgewandten Seite, hier die Oberseite, eine sphärische Oberfläche 7 aufweist. An der Unterseite hat die Schale 6 einen ihr Durchgangsloch umgebenden Ansatz 8, der in der Vertiefung 4 sitzt und einen an deren Querschnitt angepassten Querschnitt hat.

In der Lagerschale 6 sitzt das untere Ende eines insgesamt mit 9 bezeichneten Pfostens, der das Verankerungsteil für die Anbringung einer Zahnkrone (nicht dargestellt) ist und der aus zwei Einzelteilen besteht, nämlich einer Gewindehülse 10 und einem Gewindezapfen 11, die miteinander verschraubt sind, siehe auch Fig. 2 und 3. Zu diesem Zweck weist die Hülse 10 in ihrem oberen Abschnitt ein Innengewinde 12 und der Zapfen 11 ein dazu passendes Außengewinde 13 auf. Die Gewindehülse 10 ist an ihrem unteren Ende von einer Kugelkalotte 14 abgeschlossen, deren Außenfläche eine Krümmung aufweist, die der Krümmung der sphärischen Oberfläche 7 der Lagerschale 6 entspricht. Die Kugelkalotte 14 hat eine Öffnung 15, die im gezeigten Beispiel gegenüber der Achse der Gewindehülse 10 versetzt ist und durch die sich ein gegenüber dem Gewindeabschnitt verbreiterter Schaft 16 der Schraube 5 erstreckt. Oberhalb des Schaftes 16 ist die Schraube 5 mit einem Kugelkopf 17 versehen, der einen Krümmungsradius hat, der dem Krümmungsradius an der Innenseite der Kalotte 14 der Gewindehülse 10 entspricht. Außerdem besitzt die Schraube 5 im Kugelkopf 17 ein Innenprisma 18, beispielsweise einen Sechs- oder Zwölfkant.

Die Schraube 5 erstreckt sich mit ihrem Schaft 16 durch die Öffnung 15 in der Gewindehüise 10. Sie durchdringt das Durchgangsloch in der Lagerschale 6, wobei ihr verbreiterter Schaft 16 auf letzterer aufsitzt, und ist in das Innengewinde 3 des Implantats 1 eingeschraubt und drückt dabei die Kalotte 14 der Gewindehülse 10 fest gegen die Oberfläche 7 der Lagerschale 6 und diese fest auf das Implantat 1. Auf diese Weise ist die Gewindehülse 10 in ihrer Stellung an dem Implantat 1 festgelegt. Vor dem Festziehen der Schraube 5 ist die Stellung der Gewindehülse 10 veränderbar, da die Öffnung 15 einen größeren Durchmesser hat, als der Schaft 16 der Schraube 5. Aufgrund der zueinander passenden prismatischen Querschnitte der Vertiefung 4 und des Ansatzes 8 ist die Lagerschale 6 an dem Implantat 1 formschlüssig gegen Verdrehung gesichert.

In das Innengewinde 12 der Gewindehülse 10 ist das Außengewinde 13 des Gewindezapfens 11 eingeschraubt. Der Gewindezapfen 11 hat an seiner dem Kugelkopf 17 zugewandten Seite eine Kugelkalottenfläche 19, deren Krümmung derjenigen des Kugelkopfes 17 angepasst ist. Durch Einschrauben des Zapfens 11 in die Hülse 10 in einem Umfang, dass die Kugelkalottenfläche 19 des Zapfens 11 auf dem Kugelkopf 17 aufläuft und gegen diesen drückt, wird die Stellung der des Pfostens 9 10 sowohl in seiner Drehstellung als auch in seiner Neigung in Bezug auf den Kugelkopf 17 zusätzlich gesichert.

Der Zapfen 11 weist an seiner Oberfläche wenigstens zwei, besser drei längslaufende Rillen 20 auf (in der Zeichnung ist nur eine Rille dargestellt), die helfen, eine an dem Pfosten 9 befestigte Zahnkrone (nicht dargestellt), die innen über eine bzw. zwei passende Längsrippen verfügt, gegen Verdrehung auf dem Pfosten 9 zu sichern. Eine dieser Rillen, die von keiner Längsrippe der Krone besetzt wird, schafft eine Abflussmöglichkeit für den beim Befestigen der Krone verwendeten Zement. Wie bereits erwähnt, wird nach dem Befestigen des Abutment an dem Implantat nicht sofort der fertige Zahnersatz, sondern zunächst ein Provisorium befestigt, zu dessen Herstellung vom Zahnarzt auf den Pfosten des Abutment zunächst eine Abformhülse aufgesetzt wird, deren Innenkontur derjenigen der später der auf dem Pfosten 9 zu befestigenden Krone entspricht. Die an die spezielle Form des Pfostens 9 mit seinen Rillen 20 angepasste Abformhülse ist daher ebenfalls Gegenstand der vorliegenden Erfindung.

Für die Montage der aus der Lagerschale 6, der Baugruppe (Abutment) 9 und der Schraube 5 bestehenden Mesiostruktur an dem im Kiefer eines Patienten implantierten Implantats 1 wird zunächst die Lagerschale 6 in Position gebracht, wobei sie in ihrer Drehstellung in Bezug auf das Implantat 1 in durch das Prismenprofil an Vorsprung 8 und Vertiefung 4 bestimmten Schritten verändert werden kann. Dann wird die Schraube 5 durch die Öffnung 15 in der Gewindehülse 10 geführt und durch das Durchgangsloch in der Lagerschale 6 hindurch in die Gewindebohrung 3 des Implantats 1 eingeschraubt, wobei die Gewindehülse 10 in eine von den Behandlungserfordernissen vorbestimmte Winkelstellung gegenüber der Achse des Implantats 1 gebracht und durch Festschrauben der Schraube 5 fixiert wird. Das an der Schraube 5 wirkende Drehmoment muss dabei kleiner sein als jenes, das beim Eindrehen des Implantats 1 in den Kieferknochen des Patienten angewendet wurde, damit sich das Implantat 1 nicht verdreht. Die Schraube 5 kann mittels eines in den Innensechskant 8 eingeführten Werkzeugs gedreht werden. Anschließend wird der Pfosten 11 in die Gewindehülse 10 eingeschraubt, bis ihre kalottenförmige Stirnfläche 19 mit Druck auf dem Kugelkopf 17 der Schraube 5 aufsitzt.

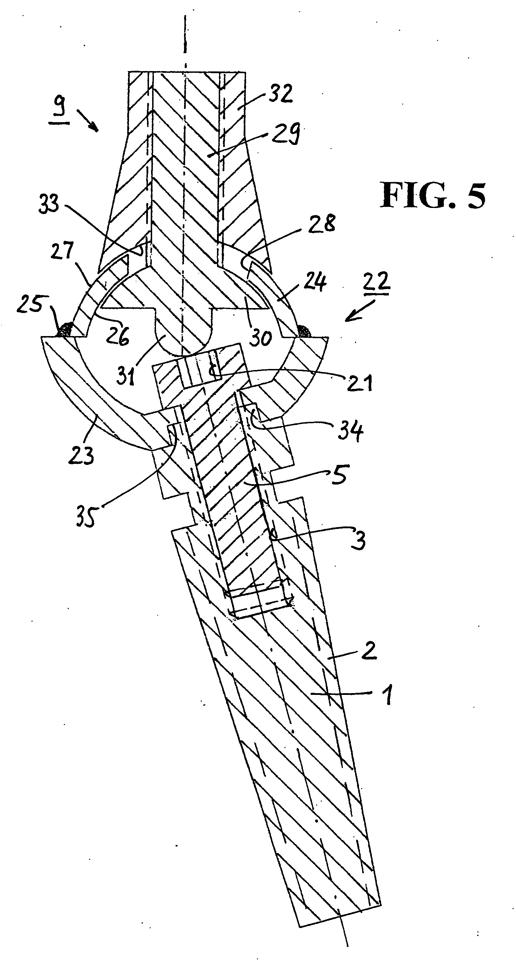

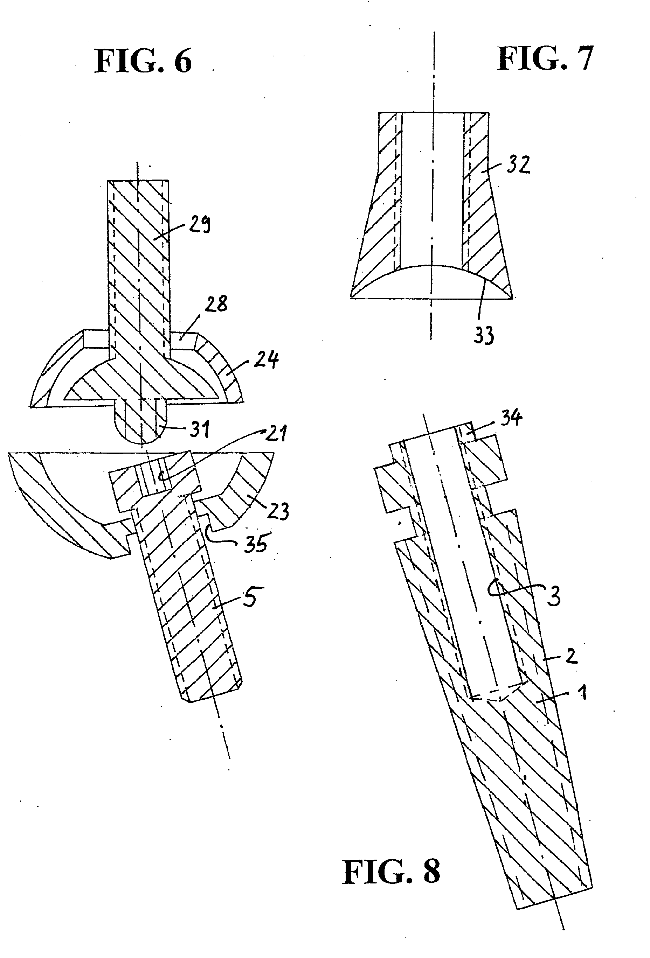

In den Fig. 5 bis 8 ist eine zweite Ausführungsform der Erfindung dargestellt. Davon zeigen die Figuren 6 bis 8 zeigen eine Unterbaugruppe und Einzelteile. Ihre Erläuterung ist in die nachfolgende Beschreibung einbezogen, auch wenn auf die nicht im einzelnen konkret Bezug genommen wird.

Man erkennt in Fig. 5 wieder ein Implantat 1 mit Außengewinde 2 und Innengewinde 3, wobei in letzteres eine Schraube 5 eingeschraubt ist. Die Schraube 5, deren Kopf mit einem Innensechskant 21 versehen ist, sichert auf dem Implantat 1 einen insgesamt mit 22 bezeichneten Schalenkörper, der aus einer unteren Schale 23, die mittels der Schraube 5 auf dem Implantat 1 befestigt ist, und einer oberen Schale 24 besteht, die an ihren Rändern bei 25 miteinander verschweißt sind. Die obere Schale 24 hat eine sphärische Innenfläche 26 und eine dazu konzentrische sphärische Außenfläche 27. Ferner weist die obere Schale 24 einen Durchbruch 28 auf, durch den sich ein Gewindezapfen 29 erstreckt, der in seinem Abschnitt, der in dem von den Schalen 23 und 24 umschlossenen Raum liegt, mit einem umlaufenden Kragen 30 versehen ist, der an seiner der oberen Schale 24 zugewandten Seite mit einer Kugelkalottenfläche versehen ist, deren Krümmung jener der sphärischen Innenfläche 26 der oberen Schale 24entspricht. An seinem unteren, der Schraube 5 zugewandten Ende ist der Gewindezapfen 29 mit einem sechskantigen Vorsprung 31 versehen. Auf den Gewindezapfen 29 ist eine Spannhülse 32 aufgeschraubt, die an ihrem unteren Ende eine konkave Kalottenfläche 33 aufweist, deren Krümmung jener der sphärischen Außenfläche 27 der oberen Schale 24 entspricht. Der Gewindezapfen 29 und die Spannhülse 32 bilden zusammen den Pfosten des Abutment, der der Befestigung einer Krone (nicht dargestellt) dient.

Das Implantat 1 hat an seinem oberen Ende einen Vorsprung 34, der die Gewindebohrung 3 umgibt und beispielsweise sechseckigen oder zwölfeckigen Querschnitt hat, wie in der einschlägigen Technik an sich bereits bekannt ist. Entsprechend hat die untere Schale 23 auf ihrer dem Dübel zugewandten Seite eine Vertiefung 35 mit einem zu dem Vorsprung 34 passenden Querschnitt, so dass es auf diese Weise möglich wird, die untere Schale 23 in vorbestimmten Drehstellungen an dem Implantat 1 formschlüssig festzulegen.

Für die Herstellung der aus der Schraube 5, der Schalenanordnung 22 und dem Gewindezapfen 29 bestehenden Anordnung müssen gemäß Fig. 6 zunächst der Gewindezapfen 29 durch die Öffnung 28 in der oberen Schale 24 und die Schraube 5 durch die Öffnung in der unteren Schale 23 gesteckt werden. Erst dann dürfen die beiden Schalen 23 und 24 an ihren Rändern miteinander verschweißt werden (Schweißraupe 25 in Fig. 5), um die in Fig. 5 gezeigte Konfiguration zu erreichen.

Im praktischen Einsatz wird nach Implantieren des Implantats 1 im Kiefer des Patienten der Schalenkörper 22 auf das Implantat 1 aufgesetzt und darauf festgeschraubt. Dabei dient der Gewindezapfen 29 als Werkzeug für das Drehen der Schraube 5, denn ihr Sechskantvorsprung 31 kann in den Innensechskant 21 der Schraube 5 eingreifen. Nach dem Festschrauben der Schraube 35 in der vorgewählten Drehstellung des Schalenkörpers 22 in Bezug auf das Implantat 1 wird die Spannhülse 32 auf den Pfosten 29 aufgeschraubt. Dabei zieht die Spannhülse 32 den Gewindezapfen 29 in feste Anlage an die sphärische Innenfläche 26 der oberen Schale 24 und gleichzeitig ihre konkave Kalottenfläche 33 in feste Anlage an die äußere sphärische Oberfläche 27 der oberen Schale 24. Die Dreh- und die Winkelstellung von Gewindezapfen 29 und Spannhülse 32 gegenüber dem Implantat 1 lässt sich in Grenzen frei wählen, da die Öffnung 28 in der oberen Schale 24 einen größeren Durchmesser als der sie durchquerende Abschnitt des Gewindezapfens 29 hat.

Vorteilhafterweise kann die Spannhülse 32 an ihrer Außenseite wenigstens zwei, besser drei längslaufende Rillen (nicht dargestellt) vergleichbar den Rillen 20 beim Ausführungsbeispiel der Fig. 1 bis 4 aufweisen.

Als Materialien für die dargestellten Einzelteile kommen alle in der Dentaltechnik üblichen Materialien in Betracht, insbesondere Titan. Alle Metallteile, die mit dem Knochen- und Zahnfleischgewebe in Berührung gelangen, sollten in an sich bekannter Weise eine Oberflächenrauhigkeit aufweisen, die das Einwachsen von Gewebe begünstigt.

## Patentansprüche

1. Abutment für die Verankerung einer Dentalprothese an einem Dentalimplantat, mit einer Pfostenanordnung und einer mit dieser verbundenen Einschraubkonstruktion zum Einschrauben in das Dentalimplantat, **dadurch gekennzeichnet, dass** zwischen der Pfostenanordnung (9) und der Einschraubkonstruktion (1, 3, 5) ein Kugelgelenk (14, 17; 23, 30) angeordnet ist, und dass an der Einschraubkonstruktion (1, 3, 5) und an der Pfostenanordnung (9) Einrichtungen (4, 8; 34, 35; 11, 30, 32) zum starren Festlegen des Kugelgelenks an dem Implantat und an der Pfostenanordnung und zum Versteifen des Kugelgelenks in sich selbst vorhanden sind.

2. Abutmant nach Anspruch 1, **dadurch gekennzeichnet, dass** die Einschraubkonstruktion eine sphärische, mit einem Durchgangsloch versehene Lagerschale (6) und eine mit einem Kugelkopf (17) versehene Schraube (5) aufweist, deren Kugelkopf (17) einen Krümmungsradius aufweist, der um ein Mindestmaß kleiner als der Krümmungsradius der Lagerschale (6) ist, und dass die Pfostenanordnung (9) aus einem Zapfen (11), der in einem Endbereich ein Außengewinde (13) und stirnseitig dort eine kugelkalottenförmige Ausnehmung (19) aufweist, deren Krümmungsradius dem des Kugelkopfes (17) entspricht, und aus einer Schraubhülse (10) besteht, die am einen Ende von einer Halbkugel (14) geschlossen ist, deren Außenseite einen Krümmungsradius hat, der dem der Lagerschale (6) entspricht und deren Innenseite einen Krümmungsradius hat, der dem des Kugelkopfes (17) entspricht, und die eine Öffnung (15) für den Durchtritt eines dem Kugelkopf (17) mit einem Gewindeabschnitt der Schraube (5) verbindenden Schraubenschaft aufweist, an dem der Öffnung (15) abgewandten Ende mit einem zu dem Gewinde (13) am Zapfen (11) passenden Innengewinde (12) versehen ist, und dass der Kugelkopf (17) axial an der dem Schaft (16) abgewandten Seite mit einer prismatischen Vertiefung (18) für die Aufnahme eines Werkzeugs versehen ist.

3. Abutment nach Anspruch 2, **dadurch gekennzeichnet, dass** das Durchgangsloch in der Lagerschale (6) von einem vorstehenden Ansatz (8) umgeben ist, der einen prismatischen, vorzugsweise sechs- oder zwölfeckigen Querschnitt aufweist.

4. Abutment nach Anspruch 2 oder 3, **dadurch gekennzeichnet, dass** die Öffnung (15) in der Schraubhülse (10) außermittig angeordnet ist.

5. Abutment nach Anspruch 1, **dadurch gekennzeichnet, dass** das Kugelgelenk aus einer mit einem Durchgangsloch versehenen Unterschale (23) und einer zu dieser gestürzt angeordneten, mit einer Öffnung (28) versehenen, sphärischen Oberschale (24), die an ihrem Rand mit dem Rand der Unterschale (23) verschweißt ist (25), und aus einem die Öffnung (28) durchdringenden Gewindezapfen (29), der einen Kragen (30) mit sphärischer Oberfläche, die an der Innenseite (26) der Oberschale (24) anliegt, aufweist, sowie einer auf den Gewindezapfen (29) geschraubten Spannhülse (33) besteht, die an ihrer der Oberschale (24) zugewandten Stirnseite eine sphärische Oberfläche (33) einer an die Krümmung der Außenfläche (27) der Oberschale (24) angepassten Krümmung aufweist, das Loch in der Unterschale (23) von einer Schraube (5) durchdrungen ist, deren Kopf in dem von Oberschale (24) und Unterschale (23) umschlossenen Raum liegt und ein Innenprisma (21) aufweist, und der Gewindezapfen (29) an seinem freien Ende innerhalb des von Oberschale (24) und der Unterschale (23) umschlossenen Raums einen zu dem genannten Innenprisma passenden Vorsprung (31) aufweist.

6. Abutment nach Anspruch 7, **dadurch gekennzeichnet, dass** das Loch in der Unterschale (23) an der dem Schraubenkopf abgewandten Unterseite der Unterschale (23) von einer Vertiefung (35) prismatischen Querschnitts zur drehfesten Verankerung an einem entsprechend angepassten Vorsprung (34) des Implantats (1) umgeben ist.

7. Abutment nach Anspruch 7 oder 8, **dadurch gekennzeichnet, dass** das Loch in der Unterschale (23) und die Öffnung (28) in der Oberschale (24) jeweils außermittig ausgebildet sind.

8. Abutment nach einem der vorhergehenden Ansprüche, **dadurch gekennzeichnet, dass** die Pfostenanordnung eine Konizität von etwa 5 Grad aufweist.

9. Abutment nach einem der Ansprüche, **dadurch gekennzeichnet, dass** die Pfostenanordnung wenigstens zwei längslaufenden Rillen (20) an ihrer Außenseite aufweist.

10. Abformhülse für die Verwendung mit einem Abutment nach Anspruch 9, **dadurch gekennzeichnet, dass** sie eine zum Aufstecken auf die Zapfenanordung (9) des Abutment geeignete Innenkontur aufweist, die eine um die Zahl der Rillen (20) um wenigstens eins verminderte Zahl längslaufender Rippen hat zum formschlüssigen Eingreifen in die Rille(n) hat.
